# EUROPÄISCHE PATENTSCHRIFT

(11) **EP 2 915 232 B1**
(45) Veröffentlichungstag und Bekanntmachung des Hinweises auf die Patenterteilung: **28.11.2018**
(21) Anmeldenummer: 12795747.0
(22) Anmeldetag: 30.10.2012
(51) Int. Cl.: H02J 3/06, H02J 3/38

(54) **VERFAHREN ZUR REGELUNG EINES ENERGIEVERSORGUNGSNETZES**
METHOD FOR REGULATING A POWER SUPPLY SYSTEM
PROCÉDÉ DE RÉGLAGE D'UN RÉSEAU D'ALIMENTATION EN ÉNERGIE

(43) Veröffentlichungstag der Anmeldung: 09.09.2015
(73) Patentinhaber: Siemens Aktiengesellschaft, 80333 München (DE)
(72) Erfinder: ILO, Albana, A-3021 Pressbaum (AT)
(74) Vertreter: Maier, Daniel Oliver
(86) Internationale Anmeldenummer: PCT/EP2012/071461
(87) Internationale Veröffentlichungsnummer: WO 2014/067557

(56) Entgegenhaltungen:
- US-B2- 7 526 366
- XIONGFEI WANG ET AL: "Distributed energy resources in grid interactive AC microgrids", POWER ELECTRONICS FOR DISTRIBUTED GENERATION SYSTEMS (PEDG), 2010 2ND IEEE INTERNATIONAL SYMPOSIUM ON, IEEE, PISCATAWAY, NJ, USA, 16. Juni 2010 (2010-06-16), Seiten 806-812, XP031730434, ISBN: 978-1-4244-5669-7
- LIMING LIU ET AL: "A Cascaded Photovoltaic System Integrating Segmented Energy Storages With Self-Regulating Power Allocation Control and Wide Range Reactive Power Compensation", IEEE TRANSACTIONS ON POWER ELECTRONICS, IEEE SERVICE CENTER, PISCATAWAY, NJ, US, Bd. 26, Nr. 12, 1. Dezember 2011 (2011-12-01), Seiten 3545-3559, XP011380331, ISSN: 0885-8993, DOI: 10.1109/TPEL.2011.2168544

## Beschreibung

### Technisches Gebiet

Die Erfindung betrifft allgemein das Gebiet der Energieversorgungsnetze. Im Speziellen bezieht sich die vorliegende Erfindung auf ein Verfahren zur Regelung eines gesamten Energieversorgungsnetzes. Dieses Energieversorgungsnetz weist dabei drei Versorgungsebenen auf.

### Stand der Technik

Unter einem Energieversorgungsnetz wird üblicherweise ein Netzwerk von elektrischen Leitungen verstanden, in welchem physikalische Vorgänge durch die so genannten Kirchhoff'schen Regeln beschrieben werden können, und durch welches Energie oder Strom von Energieerzeugern (z.B. konventionelle Kraftwerksbetreiber, etc.) zu den Verbrauchern (z.B. Industrieunternehmen, Haushalte, etc.) transportiert und verteilt wird. Für diesen Transport sind in einem Energieversorgungsnetz üblicherweise drei Versorgungsebenen vorgesehen, welche im Prinzip Netze bzw. Netzebenen mit verschiedenen, festgelegten Spannungsbereichen sind. Diese Versorgungsebenen werden daher nach dem Spannungsbereich, bei welchem elektrische Energie übertragen wird, und der entsprechenden Verteilfunktion eingeteilt. Dabei gibt es in einem Energieversorgungsnetz üblicherweise eine Hochspannungs- oder Übertragungsebene, eine Mittelspannungs- oder Verteilungsebene und eine Niederspannungs- oder Feinverteilungsebene.
In der Übertragungsebene wird die von den großen Erzeugern wie z.B. großen Wasserkraftwerken, Wärme- oder kalorischen Kraftwerken oder großen Windparks erzeugte Energie eingespeist und beispielsweise über Leistungstransformatoren an die Verteilungsebene übertragen. Die Übertragungsebene wird dabei in einem Höchst- und Hochspannungsbereich, insbesondere in Europa in einem Spannungsbereich von 60kV (Kilovolt) bis 380kV und höher, betrieben. Durch die Verteilungsebene, welche in einem Mittelspannungsbereich (z.B. 1 kV bis 60 kV) betrieben wird, wird die elektrische Energie üblicherweise an regional verteilte Transformationsstationen und/oder größer Einrichtungen wie z.B. Spitäler, Fabriken, etc. verteilt. Die Verteilungsebene wird dabei im Regelfall über Umspannwerke aus der übergeordneten Versorgungsebene, der Übertragungs- oder Hochspannungsebene, gespeist. Für eine Feinverteilung der Energie wird dann die Niederspannungs- bzw. Feinverteilungsebene mit einem Spannungsbereich z.B. in Mitteleuropa zwischen ca. 230/400 Volt bis zu 1000 Volt genutzt. D.h. die Energie wird dann von der Verteilungsebene auf den Spannungsbereich der Feinverteilungsebene transformiert und damit beispielsweise private Haushalte, kleinere Industriebetriebe, etc. versorgt.

Viele der heutzutage im Betrieb befindlichen Energieversorgungsnetze wurden vor langer Zeit - meist vor mehr als fünfzig Jahren - in ihrer Struktur und Topologie konzipiert. Diese Energieversorgungsnetze weisen meist eine zentrale bzw. hierarchische Struktur auf, bei welcher die benötigte Energie in einer obersten Versorgungsebene - d.h. in der Übertragungsebene - eingespeist und von dieser an die darunterliegenden Versorgungsebenen - d.h. die Verteilungs- und Feinverteilungsebene - weitergeleitet wird. Der Energiefluss verläuft damit immer von einem oder mehreren zentralen Erzeugern (z.B. Wasserkraftwerken, kalorischen Kraftwerken, etc.) zu den Verbrauchern, welche üblicherweise an den unteren beiden Versorgungsebenen angebunden sind. Auf der obersten Versorgungsebene bzw. der Übertragungsebene wird üblicherweise eine automatisierte Regelung durchgeführt und das gesamte Energieversorgungsnetz ist durch den Verbrauch bzw. Bedarf auf den unteren beiden Versorgungsebenen - d.h. der Verteilungsebene und der Feinverteilungsebene gesteuert.

Allerdings wurde in letzter Zeit eine Nutzung von so genannten erneuerbarer Energieressourcen wie z.B. Wasserkraft, Windenergie, solare Strahlung, etc. aufgrund verschiedener Faktoren wie z.B. begrenzter Reichweite der derzeit vorwiegend genutzten fossilen Energieträger (z.B. Kohle, Gas, Erdöl), Klimaschutzbemühungen, Umweltschutzbelange, etc. immer bedeutender. Häufig ist ein Einsatz von erneuerbaren Energieressourcen mit einer so genannten dezentralen Stromerzeugung und - versorgung gekoppelt, bei welcher elektrische Energie verbrauchernahe erzeugt wird. Dabei ist die Leistungsfähigkeit der Energieerzeugungsanlagen wie z.B. kleine Wasserkraftwerke, kleiner Wind- oder Solarparks oder Photovoltaik üblicherweise auf eine Deckung des Energiebedarfs der unmittelbar oder in der näheren Umgebung angeschlossenen Verbraucher ausgelegt. Im Gegensatz zu einer zentralen Energieerzeugung, für welche die heutigen Energieversorgungsnetze immer noch konzipiert sind, wird bei der dezentralen Energieerzeugung die elektrische Energie nicht nur in der Hochspannungs- oder Übertragungsebene eingespeist, sondern eine Einspeisung von Energie aus z.B. Kleinkraftwerken kann auch über die Mittelspannungs- oder Verteilungsebene und/oder z.B. mittels Photovoltaik-Anlagen auch über die Niederspannungs- oder Feinverteilungsebene erfolgen.

Eine dezentrale Energieerzeugung bringt aber neben dem Vorteil, dass beispielsweise Verluste durch Transformation vermieden werden, auch den Nachteil mit sich, dass eine Energieproduktion aus Windkraft, Solarenergie und in einem geringen Maße auch Wasserkraft z.B. aufgrund von Wetterabhängigkeit deutlich weniger planbar sind, als z.B. eine Energieerzeugung mittels konventioneller Kraftwerke. Weiterhin sind die heute in Betrieb befindlichen Energieversorgungsnetze weitgehend für eine Energieübertragung in eine Richtung - d.h. von der Übertragungsebene über die Verteilungsebene und Feinverteilungsebene zu den Verbrauchern ausgelegt. Wird nun auf einer der unteren Versorgungsebenen wie der Verteilungs- und/oder der Feinverteilungsebene mehr Energie erzeugt, als auf dieser Versorgungsebene konsumiert wird, so kommt es zu einer umgekehrten Flussrichtung der Energie. Das bedeutet, es wird von den unteren Versorgungsebenen des Energieversorgungsnetzes Energie zurückgespeist. Dies kann zu erheblichen Problemen bei der Betriebssicherheit und -zuverlässigkeit des Energieversorgungsnetzes führen.

Aus den Schriften Per Lund: "The Danish Cell Project - Part 1: Background and General Approach" IEEE Power Engineering Society General Meeting, June 2007. und N. Martensen, H. Kley, S. Cherian, O. Pacific, Per Lund: "The Cell Controller Pilot Project: Testing a Smart Distribution Grid in Denmark", Grid Intertop 2009: The Road to an Interoperable Grid, Proceedings, 2009, 216-222. ist ein Projekt bekannt, welches von einem Dänischen Übertragungsnetzbetreiber initiiert und realisiert worden ist. Dabei wurde versucht, die Probleme - vor allem bei Betriebssicherheit und -zuverlässigkeit des Energieversorgungsnetzes - zu lösen, welche durch einen hohen Anteil an dezentraler Energieerzeugung im Energieversorgungsnetz entstehen. Bei der in diesen Schriften vorgeschlagenen Lösung wird eine Neugestaltung bzw. Erweiterung einer bestehenden Struktur des Energieversorgungsnetzes vorgeschlagen. Dabei werden insbesondere die Übertragungs- und die Verteilungsebene bzw. deren Betreiber über ein eigenes Managementsystem - der so genannte Cell Controller - stärker integriert. Von diesem Managementsystem bzw. dem Cell Controller wird eine Art Rolle eines Super-Managementsystems übernommen, von welchem dezentrale Energieerzeuger koordiniert, Wirk- und Blindleistungsflüsse zur Übertragungsebene kontrolliert, im Notfall Teile der Verteilungsebene von der Übertragungsebene abgekoppelt und damit Betreiber der Übertragungs- wie der Verteilungsebene gemeinsam beobachtet, gesteuert und geregelt werden können. Ein Einsatz eines derartigen Managementsystems weist allerdings den Nachteil einer sehr komplexen Architektur auf und stellt gegebenenfalls einen großen und aufwendigen Eingriff in die bestehende Struktur des Energieversorgungsnetzes dar. Weiterhin ist fraglich, ob der Einsatz eines derartigen Managementsystems für ein relativ großes Energieversorgungsnetz überhaupt durchführbar ist, da das Management zentral vom so genannten Cell Controller übernommen wird. Weiterhin ist aus der Schrift WO 2012/008979 A2 ein dynamisches, verteiltes Energieversorgungsnetz-Kontrollsystem bekannt. Durch dieses Kontrollsystem können in einem Energieversorgungsnetz dynamisch verteilte Energieerzeugungseinrichtungen auf der Übertragungs- und Verteilungsebene gesteuert und geregelt werden. Dabei ist das Energieversorgungsnetz im Bereich der Übertragungs- und Verteilungsebene in Regionen unterteilt. Jeder Region wird dann ein regionales Steuer- und Regelmodul zugeordnet, von welchem die Steuerung und Regelung des jeweiligen regionalen Teils der Übertragungs- und Verteilungsebene überwacht wird. Weiterhin ist jedes regionale Steuer- und Regelmodul mit einer Vielzahl an lokalen Steuer- und Regelmodulen verbunden, mit welchen die in der Region befindlichen dezentralen Energieerzeuger gekoppelt sind. Eine Energieerzeugung und ein Energieverbrauch werden von einem übergeordneten, zentralen Steuer- und Regelmodul überwacht und analysiert, um die Energiebalance im Energieversorgungsnetz sicherzustellen. Zusätzlich wird von den verschiedenen Steuer- und Regelmodulen ein Energiefluss an bestimmten Knoten im Energieversorgungsnetz überwacht und analysiert, um bei Überschreiten von bestimmten Systemparametern entsprechende Schritt und Maßnahmen zur Netzsicherheit und Netzstabilität einzuleiten. Auch das in der Schrift WO 2012/008979 A2 offenbarte System weist den Nachteil, einer sehr komplexen und aufwendigen Architektur auf, da eine Vielzahl von Steuer- und Regelmodulen in das Energieversorgungsnetz eingebracht werden müssen. Weiterhin müssen die Module mit großem Aufwand im Energieversorgungsnetz installiert werden und es müssen für eine ausreichende Kontrolle eine Vielzahl von Systemparametern an verschiedenen Stellen des Energieversorgungsnetzes überwacht und ausgewertet werden.
Beiden aus den jeweiligen Schriften bekannten Systemen ist auch der Nachteil gemeinsam, dass sie keine Steuerung und Regelung von dezentral auf der Feinverteilungsebenen bzw. Niederspannungsebene erzeugter und eingespeister Energie ermöglichen.

Die US 7 526 366 B2 offenbart ein mathematisches Modell für die automatische Anpassung von Regelungsparametern für die Regelung von Versorgungsnetzen.

### Darstellung der Erfindung

Der Erfindung liegt daher die Aufgabe zugrunde, ein Verfahren zur Regelung eines gesamten Energieversorgungsnetzes anzugeben, durch welches auf einfache und effiziente Weise eine dezentrale Steuerung und Regelung von verschiedenen Versorgungsebenen eines gesamten Energieversorgungsnetzes ohne großen Aufwand und unter Berücksichtigung einer vorhandenen Netztopologie ermöglicht wird.

Diese Aufgabe wird ein Verfahren der eingangs angeführten Art mit den Merkmalen gemäß dem unabhängigen Patentanspruch gelöst. Vorteilhafte Ausführungsformen der vorliegenden Erfindung sind in den abhängigen Ansprüchen beschrieben.

Die Lösung der Aufgabe erfolgt mit einem Verfahren der eingangs erwähnten Art, bei welchem jede der drei Versorgungsebenen als eigenständige Regeleinheit betrachtet wird und damit unabhängig geregelt werden kann. Eine Schnittstelle zwischen jeweils zwei Regeleinheiten wird dabei durch eine Steuerung der zwischen den beiden Regeleinheiten übertragenen Wirkleistung und Blindleistung definiert.

Der Hauptaspekt der vorgeschlagenen Lösung besteht darin, dass das Energieversorgungsnetz in seiner Gesamtheit betrachtet und jede der Versorgungsebenen als eigenständige Regeleinheit gesehen wird. Als Folge können die einzelnen Versorgungsebenen des gesamten Energieversorgungsnetzes als Glieder einer Kette verstanden werden, welche an Berührungspunkten durch eine Steuerung der Wirkleistung und der Blindleistung flexibel miteinander interagieren können. Insbesondere einer mittleren oder zweiten Versorgungsebene der drei Versorgungsebenen im Energieversorgungsnetz kommt eine zentrale, strategische Position zu, weil diese Versorgungsebene Schnittstellen den beiden anderen Versorgungsebenen aufweist. Durch das erfindungsgemäße Verfahren kann auf einfache Weise auf jeder Versorgungsebene eine dezentrale Energieerzeugung ohne große Veränderungen in der Struktur des Energieversorgungsnetzes berücksichtigt bzw. integriert werden. Es wird dadurch auch ein effizienter und sicherer Betrieb wie eine dezentrale Steuerung eines Energieversorgungsnetzes ermöglicht, da sehr einfach bei verschiedenen Ereignissen (z.B. Überlast, etc.) auf einer oder mehreren Versorgungsebenen in Echtzeit reagiert werden kann.

Günstig ist auch, wenn bei jeder Regeleinheit ein für die jeweilige Regeleinheit vorgegebener Spannungsbereich eingehalten wird. Für die jeweiligen Versorgungsebenen bzw. Regeleinheiten können Spannungsbereiche wie z.B. Hochspannung, Mittelspannung oder Niederspannung beispielsweise durch verschiedene internationale und/oder nationale Standards vorgegeben sein. Diese Spannungsbereiche werden dann auf sehr einfache Weise für die jeweilige Regeleinheit überwacht und kontrolliert und es wird weiterhin dafür gesorgt, dass diese Bereiche trotz dezentraler Energieeinspeisung von der jeweiligen Regeleinheit eingehalten werden.

Dabei ist es auch von Vorteil, wenn bei einer Regelung einer einzelnen Regeleinheit eine Primärregelung, einen Sekundärregelung und eine Tertiärregelung verwendet werden. Durch das erfindungsgemäße Verfahren wird jede Versorgungsebene getrennt als eigenständige Regeleinheit betrachtet - das bedeutet ein Kontrollfeld beschränkt sich jeweils auf die jeweilige Versorgungsebene. Jede der Versorgungsebenen des Energieversorgungsnetzes weist dabei in sich dasselbe Regelschema auf. D.h. Schwankungen zwischen Einspeisung und Entnahme der Energie wird von jeder Regeleinheit selbst kurzfristig ausgeglichen, indem z.B. eine Energieaufnahme durch die Regeleinheit erhöht oder gesenkt wird.

Bei der Primärregelung werden insbesondere Ungleichgewichte zwischen einem Leistungsangebot und einer Leistungsnachfrage innerhalb der jeweiligen Versorgungsebene bzw. bei der jeweiligen Regeleinheit ausgeglichen. D.h. es werden die jeweiligen Erzeuger der jeweiligen Versorgungsebene entsprechend geregelt. Das sind z.B. auf einer ersten Versorgungsebene bzw.

Übertragungsebene die großen Energieerzeuger (z.B. große Wasserkraftwerke, Wärmekraftwerke, etc.). Auf einer zweiten Versorgungsebene bzw. Verteilungsebene werden beispielsweise als Objekt der Primärregelung die dezentralen Energieerzeuger (z.B. kleine Wasserkraftwerke, Windkraftanlagen, etc.) geregelt, von denen Energie auf dieser Ebene eingespeist wird. Bei einer dritten Versorgungsebene bzw. Niederspannungsebene werden bei der Primärregelung Kundenanlagen wie z.B. private Photovolaik-Anlagen berücksichtigt. Ziel der Primärregelung ist es üblicherweise eine stabile Netzfrequenz herzustellen.

Bei der Sekundärregelung wird auf jeder Versorgungsebenen bzw. innerhalb jeder Regeleinheit des erfindungsgemäßen Verfahrens danach getrachtet, das Gleichgewicht zwischen einem Stromangebot und einer Stromnachfrage nach Auftreten einer Differenz in dieser Regeleinheit wiederherzustellen. Im Gegensatz zur Primärregelung wird hier die Situation innerhalb der jeweiligen Regeleinheit inklusive einem Stromaustausch mit den anderen Regeleinheiten betrachtet. Dafür werden dann die Leistungsflüsse (Wirk- und Blindleistung) an den jeweiligen Schnittstellen zwischen den Regeleinheit betrachtet. Dabei wird beispielsweise durch Überwachung der Netzfrequenz darauf geachtet, dass von Primär- und Sekundärregelung immer in eine gleiche Flussrichtung gearbeitet wird.

Bei der Tertiärregelung oder so genannte Minutenreserve werden ebenfalls Energie- bzw. Stromreserven - insbesondere nach entsprechender Anforderung - im bzw. für die jeweilige Regeleinheit bereitgestellt. Dabei kann zwischen einer positiven und einer negativen Regelenergie unterschieden werden. Bei einer so genannten positiven Minutenreserve bzw. Regelenergie wird eine Unterproduktion an Energie im jeweiligen Regelelement abgefedert. Mit einer negativen Minutenreserve bzw. Regelenergie ist üblicherweise jene Kapazität gemeint, welche für ein Speichern oder Zurückhalten von Energie benötigt wird, wenn zu viel Energie und zu wenig Nachfrage in der jeweiligen Regeleinheit vorhanden ist.

Es empfiehlt sich beim erfindungsgemäßen Verfahren auch, wenn über die Schnittstelle zwischen den Regeleinheiten Regelwerte, insbesondere Werte für die Blindleistung, die Wirkleistung und/oder den so genannten Wirkfaktor, ausgetauscht werden. Auf diese Weise wird eine Übertragung und Auswertung von Regelwerten zwischen den Regeleinheiten bzw. Versorgungsebenen für eine entsprechende Steuerung gering gehalten. Bei einer herkömmlichen Verteilungseinrichtung in einem europäischen Energieversorgungsnetz werden beispielsweise zwischen Übertragungs- und Verteilungsebene bis zu 500 Daten- oder Regelwerte ausgetauscht. Durch das erfindungsgemäße Verfahren ist es z.B. möglich, nur durch Übertragung von Blindleistung, Wirkleistung und/oder dem so genannten Wirkfaktor die Spannung innerhalb der jeweils vorgegebenen Bereiche für die Regeleinheiten (z.B. Übertragungsebene, Verteilungsebene) zu halten. Damit wird auf einfache Weise eine Anzahl an zwischen den Versorgungsebenen zu übertragenden Daten und/oder Regelwerten erheblich reduziert.

Bei einer zweckmäßigen Weiterbildung der Erfindung ist vorgesehen, dass durch eine Absenkung der zwischen den jeweiligen Regeleinheiten übertragenen Wirkleistung und Blindleistung an der Schnittstelle zwischen diesen Regeleinheiten die Regeleinheiten getrennt werden und dann unabhängig voneinander betrieben werden können. Durch das erfindungsgemäße Verfahren wird auf sehr einfache Weise ein Bilden von so genannten "Micro-Grids" oder Inselnetzen ermöglicht. Durch das Absenken der übertragenen Wirkleistung und Blindleistung an der Schnittstelle zwischen den jeweiligen Regeleinheiten kann eine Regeleinheit von der anderen Regeleinheit getrennt werden und als so genanntes Inselnetz agieren. So kann z.B. die Verteilebene als eigenständige Regeleinheit von der Übertragungsebene z.B. zeitweise abgekoppelt werden und als Inselnetz agieren. Ein Inselnetz ist dabei eine Form der Stromverteilung, welche häufig nur einem oder wenigen kleineren Energieversorgern (z.B. kleiner Wasserkraftwerke, Windpark, etc.) besteht, von welchen ein definiertes Gebiet mit Energie versorgt wird. Für den Zeitraum der Abkopplung weist die Regeleinheit dann keinen Anschluss beispielsweise zur Übertragungsebenen des Energieversorgungsnetzes auf.

Für ein Wiederanbinden von Regeleinheiten (z.B. Inselnetzen, etc.) an eine andere Regeleinheit (z.B. Übertragungsebene, etc.) sieht das erfindungsgemäße Verfahren idealer Weise vor, dass zuerst eine Synchronisierung zwischen den zu verbindenden Regeleinheiten durchgeführt wird. Danach wird dann die zwischen den zu verbindenden Regeleinheiten übertragene Wirkleistung und Blindleistung an der Schnittstelle zwischen diesen Regeleinheiten gesteigert.

Es ist außerdem vorteilhaft, wenn als erste der drei Versorgungsebenen eine Hochspannungs- oder Übertragungsebene vorgesehen wird. Als zweite der drei Versorgungsebenen kann eine Mittelspannungs- oder Verteilungsebene und als dritte der drei Versorgungsebene eine Niederspannungs- oder Feinverteilungsebene vorgesehen werden. Diese Versorgungsebenen sind üblicherweise in Energieversorgungsnetzen vorgesehen und werden durch das erfindungsgemäße Verfahren idealer Weise als eigenständige Regeleinheiten betrachtet. Jede Versorgungsebene wird dabei von den anderen Versorgungsebenen als so genannte "Black Box" gesehen. Eine Interaktion der jeweiligen Versorgungsebenen erfolgt sehr einfach über die jeweilige Schnittstelle durch entsprechende Steuerung der Wirk- und Bildleistung, wobei die Wirk- und Blindleistung in beide Richtungen übertragen werden kann.

### Kurzbeschreibung der Zeichnung

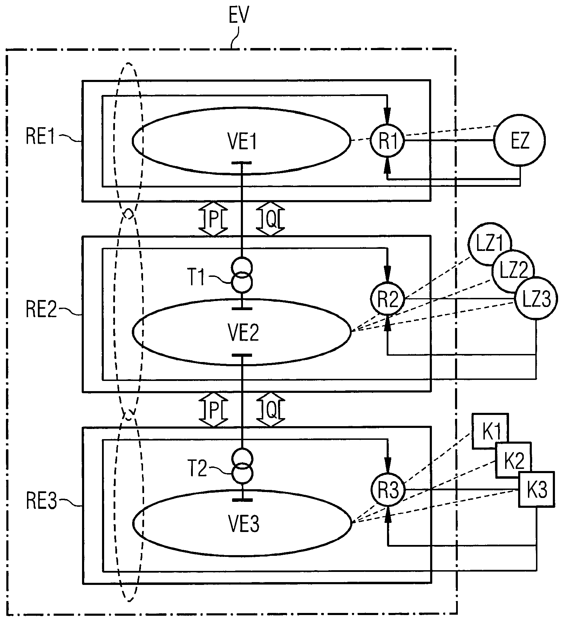

Die Erfindung wird nachfolgend in beispielhafter Weise anhand der beigefügten Figuren erläutert. Es zeigt Figur 1 schematisch ein beispielhaftes Energieversorgungsnetz, in welchem das erfindungsgemäße Verfahren zur Regelung eines gesamten Energieversorgungsnetzes zur Anwendung kommt.

### Ausführung der Erfindung

Figur 1 zeigt in schematischer Weise ein beispielhaftes Energieversorgungsnetz EV. Dieses Energieversorgungsnetz EV weist drei Versorgungsebenen VE1, VE2, VE3 auf. Dabei ist als oberste oder erste Versorgungsebene VE1 eine Hochspannungs- oder Übertragungsebene vorgesehen. Eine zweite oder mittlere Versorgungsebene VE2 ist dabei als Mittelspannungs- oder Verteilungsebene ausgeführt und als dritte oder unterste Versorgungsebene ist einen Niederspannungs- oder Feinverteilungsebene vorgesehen.

Auf jeder dieser drei Versorgungsebenen VE1, VE2, VE3 wird über jeweilige beispielhafte Energieerzeuger EZ, LZ1, LZ2, LZ3, K1, K2, K3 Energie in der jeweiligen Versorgungsebene VE1, VE2, VE3 in das Energieversorgungsnetz EV dezentral eingespeist. Auf der ersten Versorgungsebene bzw. der Übertragungsebene VE1 wird von großen Energieerzeugern EZ wie z.B. großen Wasserkraftwerken, Wärme- oder kalorischen Kraftwerken oder großen Windparks erzeugte Energie in das Energieversorgungsnetz eingespeist. An die zweite Versorgungsebene bzw. die Verteilungsebenen können neben größeren Verbrauchern (z.B. Fabriken, Spitäler, etc.) auch regionale oder lokale Energieerzeuger LZ1, LZ2, LZ3 wie z.B. kleiner Wasserkraftwerke, Windparks, etc. angeschlossen sein. Von diesen regionalen oder lokalen Energieerzeugern LZ1, LZ2, LZ3 wird dann dezentral erzeugte Energie ins das Energieversorgungsnetz eingespeist. Auf der untersten Versorgungsebene oder der Feinverteilungsebene VE3 sind üblicherweise private Haushalte, kleinere Industriebetriebe, etc. als Verbraucher an das Energieversorgungsnetz EV angeschlossen. Aber auch an der dritten Versorgungsebene VE3 kann durch private Energieerzeuger K1, K2, K3 wie z.B. Photovoltaik-Anlagen, etc. Energie ins Energieversorgungsnetz EV eingespeist werden.

Durch das erfindungsgemäße Verfahren wird jede der drei Versorgungsebenen VE1, VE2, VE3 als eigenständige Regeleinheit RE1, RE2, RE3 betrachtet, welche unabhängig geregelt wird. Dabei weist jede Regeleinheit RE1, RE2, RE3 dasselbe Regelschema R1, R2, R3 auf und es werden bei einer Regelung der jeweiligen Regeleinheit RE1, RE2, RE3 eine Primärregelung, eine Sekundärregelung und eine Tertiärregelung verwendet. Für die jeweilige Regeleinheit RE1, RE2, RE3 ergeben sich damit unterschiedliche Objekt für die Regelung R1, R2, R3. In der ersten Versorgungsebene VE1, von welcher eine erste Regeleinheit RE1 gebildet wird, werden insbesondere die großen Energieerzeuger geregelt. Auf der zweiten Versorgungsebene VE2, welche eine zweite Regeleinheit RE2 darstellt, sind das Objekt der Regelung R2, insbesondere der Primärregelung, insbesondere die dezentralen (regionalen und/oder lokalen) Energieerzeuger LZ1, LZ2, LZ3. In der dritten Versorgungsebene VE3, von welcher eine dritte Regeleinheit RE3 gebildet wird, wird Energie beispielsweise von privaten Erzeugern K1, K2, K3 erzeugt und eingespeist, wodurch diese Kundenanlagen (z.B. Photovoltaik, etc.) auf der dritten Versorgungsebene VE3 entsprechend geregelt werden müssen.

Gemäß dem erfindungsgemäßen Verfahren zur Regelung des Energieversorgungsnetzes EV wird dann zwischen jeweils zwei Regeleinheiten RE1, RE2, RE3 eine Schnittstelle durch eine Steuerung durch einer zwischen diesen beiden Regeleinheiten RE1, RE2, RE3 übertragenen Wirkleistung P und Blindleistung Q definiert. Bei dem beispielhaft dargestellten Energieversorgungsnetz EV wird daher eine Schnittstelle durch Steuerung der Wirkleistung P und der Blindleistung Q zwischen der ersten und der zweiten Regeleinheit RE1, RE2 - und damit zwischen der Übertragungsebene VE1 und der Verteilungsebene VE2 - definiert. Weiterhin wird eine Schnittstelle über die Steuerung von Wirkleistung P und Blindleistung Q zwischen der zweiten und dritten Regeleinheit RE2, RE3 bzw. der Verteilungsebene VE2 und der Feinverteilungsebene VE3 gebildet. Als Folge können die Versorgungsebenen VE1, VE2, VE3 bzw. die Regeleinheiten RE1, RE2, RE3 wie Glieder einer Kette durch die Steuerung der Wirkleistung P und der Blindleistung Q an den jeweiligen Schnittstellen flexibel interagieren, wobei die zweiten Regeleinheit RE2 bzw. der Verteilungsebene VE2 aufgrund ihrer Position - sie weist Schnittstellen mit den beiden anderen Versorgungsebenen VE1, VE2 auf - als zentrales, strategisches Kettenglied gesehen werden kann. Die jeweilige Regeleinheit RE1, RE2, RE3 stellt für die anderen Regeleinheiten RE1, RE2, RE3 dabei eine so genannte "Black Box" dar und es werden über die Schnittstelle zwischen den Regeleinheiten RE1, RE2, RE3 nur sehr wenige Daten bzw. Regelwerte ausgetauscht. So wird z.B. zwischen der ersten Regeleinheit RE1 bzw. der Übertragungsebene VE1 und der zweiten Regeleinheit RE2 bzw. der Verteilungsebene VE2 z.B. für ein Einhalten von jeweils für die Versorgungsebene VE1, VE2 vorgegebenen Spannungsbereiche nur Werte für die Blindleistung Q und/oder die Wirkleistung P und/oder ein Wert für den so genannten Wirkfaktor cosΦ ausgetauscht.

Weiterhin kann jede Regeleinheit RE1, RE2, RE3 bzw. jede Versorgungsebene VE1, VE2, VE3 einen vorgegebenen Spannungsbereich aufweisen, welcher von der jeweiligen Regeleinheit eingehalten werden soll. Die erste Regeleinheit RE1 bzw. die Übertragungsebene VE1 wird dabei z.B. in einem Höchst- und Hochspannungsbereich (z.B. 60kV bis 380kV und gegebenenfalls auch höher) betrieben. In der zweiten Regeleinheit RE2 bzw. der Verteilungsebene VE2 kann z.B. ein Mittelspannungsbereich (z.B. 1 kV bis 60 kV) eingehalten werden. Für eine Feinverteilung der Energie kann dann die dritte Regeleinheit RE3 bzw. die Feinverteilungsebene VE3 in einem Niederspannungsbereich beispielsweise zwischen ca. 230/400 Volt betrieben werden.

Für eine spannungsmäßige Umformung der Energie zwischen den Versorgungsebenen VE1, VE2, VE3 sind daher entsprechende Transformationsstationen T1, T2 vorgesehen. Die zweite Regeleinheit RE2 bzw. Versorgungsebene VE2 weist dazu beispielsweise eine erste Transformationsstation T1 (z.B. Umspannwerk, etc.) auf. Auf der dritten Versorgungsebene VE3 bzw. bei der dritten Regeleinheit RE3 ist dazu eine zweite Transformationsstation T2 (z.B. Transformator, etc.) vorgesehen.

Über eine Steuerung der zwischen den Regeleinheiten RE1, RE2, RE3 übertragenen Wirkleistung P und Blindleistung Q können zusätzlich sehr einfach so genannte Micro-Grids oder Inselnetz kreiert bzw. wieder in das Energieversorgungsnetz EV eingebunden werden. Es kann beispielsweise die zweite Regeleinheit RE2 bzw. die zweite Versorgungsebene VE2 gemeinsam mit der dritten Regeleinheit RE3 von der ersten Regeleinheit RE1 bzw. der Übertragungsebene VE1 (vorübergehend) abgekoppelt werden, weil z.B. von den regionalen bzw. lokalen Erzeuger LZ1, LZ2, LZ3 genügend Energie produziert wird, um eine Bedarf der zweiten und dritten Versorgungsebene VE2, VE3 zu decken. Dabei wird eine Übertragung der Wirkleistung P und der Blindleistung Q über die Schnittstelle zwischen der ersten und der zweiten Regeleinheit RE1, RE2 bis auf Null abgesenkt. Die erste und zweite Versorgungsebenen VE1, VE2 sind dann immer noch synchronisiert, aber es wird keine Leistung P, Q mehr zwischen ihnen übertragen. Nachdem dann die entsprechende erste Transformationsstation T1 abgeschaltet worden ist, sind die beiden Versorgungsebenen VE1, VE2 bzw. die beiden Regeleinheiten RE1, RE2 voneinander getrennt. Die zweite Regeleinheit wird dann als Micro-Grid oder Inselnetz betrieben.

Für ein Wiederanbinden der zweiten Regeleinheit RE2 an die erste Regeleinheit RE1 bzw. an die Übertragungsebene VE1, z.B. weil der Energiebedarf nicht mehr lokal/regional gedeckt werden kann, wird zuerst eine Synchronisierung zwischen der ersten Regeleinheit RE1 und der anzubindenden zweiten Regeleinheit RE2 durchgeführt. Dann wird die zu übertragene Wirkleistung P und Blindleistung Q zwischen den Regeleinheiten RE1, RE2 gesteigert, sodass wieder Leistung P, Q zwischen den Regeleinheiten RE1, RE2 ausgetauscht werden kann.

Durch das erfindungsgemäße Verfahren wird ein Energieversorgungsnetz EV als ein Art Energieversorgungskette dargestellt, bei welche die einzelnen Regeleinheiten RE1, RE2, RE3 bzw. Kettenglieder einfach und flexibel miteinander interagieren können. Dadurch können ohne großen Aufwand dezentrale Energieerzeuger LZ1, LZ2, LZ3, K1, K2, K3 sehr einfach in bestehendes Energieversorgungsnetz EV integriert werden.

## Patentansprüche

1. Verfahren zur Regelung eines elektrischen Energieversorgungsnetzes (EV), wobei das Energieversorgungsnetz (EV) drei Versorgungsebenen (VE1, VE2, VE3) aufweist, wobei jede Versorgungsebene (VE1, VE2, VE3) einen vorgegebenen Spannungsbereich aufweist und über mindestens eine Schnittstelle mit einer anderen Versorgungsebene verbunden ist,
**dadurch gekennzeichnet**,
- das s jede der drei Versorgungsebenen (VE1, VE2, VE3) als eigenständige Regeleinheit (RE1, RE2, RE3) geregelt wird, wobei bei einer Regelung (R1, R2, R3) einer einzelnen Regeleinheit (RE1, RE2, RE3) eine Primärregelung, eine Sekundärregelung und eine Tertiärregelung durchgeführt wird, und
- dass eine Schnittstelle zwischen jeweils zwei Regeleinheiten (RE1, RE2, RE3) durch eine Steuerung einer zwischen den beiden Regeleinheiten (RE1, RE2, RE3) übertragenen Wirkleistung (P) und Blindleistung ,(Q) definiert wird.

2. Verfahren nach Anspruch 1, **dadurch gekennzeichnet, dass** bei jeder Regeleinheit (RE1, RE2, RE3) ein für die jeweilige Regeleinheit (RE1, RE2, RE3) vorgegebener Spannungsbereich eingehalten wird.

3. Verfahren nach einem der Ansprüche 1 bis 2, **dadurch gekennzeichnet, dass** über die Schnittstelle zwischen den Regeleinheiten (RE1, RE2, RE3) Regelwerte, insbesondere für die Blindleistung (Q), die Wirkleistung (P) und/oder den Wirkfaktor (cosΦ), ausgetauscht werden.

4. Verfahren nach einem der Ansprüche 1 bis 3, **dadurch gekennzeichnet, dass** durch eine Absenkung der zwischen den Regeleinheiten (RE1, RE2, RE3) übertragenen Wirkleistung (P) und Blindleistung (Q) an der Schnittstelle Regeleinheiten (RE1, RE2, RE3) getrennt werden.

5. Verfahren nach einem der Ansprüche 1 bis 4, **dadurch gekennzeichnet, dass** für eine Wiederanbindung von Regeleinheiten (RE1, RE2, RE3) an andere Regeleinheiten (RE1, RE2, RE3) zuerst eine Synchronisierung zwischen den zu verbindenden Regeleinheiten (RE1, RE2, RE3) durchgeführt wird, und dass dann die zwischen den Regeleinheiten (RE1, RE2, RE3) übertragene Wirkleistung (P) und Blindleistung (Q) an der Schnittstelle zwischen den Regeleinheiten (RE1, RE2, RE3) gesteigert wird.

6. Verfahren nach einem der Ansprüche 1 bis 5, **dadurch gekennzeichnet, dass** als erste (VE1) der drei Versorgungsebenen (VE1, VE2, VE3) eine Hochspannungs- oder Übertragungsebene, dass als zweite (VE2) der drei Versorgungsebenen (VE1, VE2, VE3) eine Mittelspannungs- oder Verteilungsebene und dass als dritte (VE3) der drei Versorgungsebenen (VE1, VE2, VE3) eine Niederspannungs- oder Feinverteilungsebene vorgesehen werden.

## Claims

1. Method for regulating an electrical power grid (EV), wherein the power grid (EV) has three supply levels (VE1, VE2, VE3), wherein each supply level (VE1, VE2, VE3) has a predefined voltage range and is connected to another supply level by way of at least one interface,
**characterised in that**
- each of the three supply levels (VE1, VE2, VE3) is regarded as a self-contained regulating unit (RE1, RE2, RE3), wherein primary control, secondary control and tertiary control are used for control (R1, R2, R3) of an individual regulating unit (RE1, RE2, RE3), and
- an interface between two regulating units (RE1, RE2, RE3) is defined by control of an active power (P) and reactive power (Q) transmitted between the two regulating units (RE1, RE2, RE3).

2. Method according to claim 1, **characterised in that** for each regulating unit (RE1, RE2, RE3) a voltage range predefined for the respective regulating unit (RE1, RE2, RE3) is maintained.

3. Method according to one of claims 1 to 2, **characterised in that** control values, in particular for the reactive power (Q), the active power (P) and/or the power factor (cosΦ), are exchanged via the interface between the regulating units (RE1, RE2, RE3).

4. Method according to one of claims 1 to 3, **characterised in that** regulating units (RE1, RE2, RE3) are separated by reducing the active power (P) and reactive power (Q) transmitted between the regulating units (RE1, RE2, RE3) at the interface thereof.

5. Method according to one of claims 1 to 4, **characterised in that** for reconnection of regulating units (RE1, RE2, RE3) to other regulating units (RE1, RE2, RE3), synchronisation is first carried out between the regulating units (RE1, RE2, RE3) to be connected, and that the active power (P) and reactive power (Q) transmitted between the regulating units (RE1, RE2, RE3) is increased at the interface between the regulating units (RE1, RE2, RE3).

6. Method according to one of claims 1 to 5, **characterised in that** a high-voltage or transmission level is provided as the first (VE1) of the three supply levels (VE1, VE2, VE3), that a medium-voltage or primary distribution level is provided as the second (VE2) of the three supply levels (VE1, VE2, VE3), and that a low-voltage or secondary distribution level is provided as the third (VE3) of the three supply levels (VE1, VE2, VE3).

## Revendications

1. Procédé de régulation d'un réseau d'alimentation en énergie électrique (EV), le réseau d'alimentation en énergie (EV) comportant trois niveaux d'alimentation (VE1, VE2, VE3), chaque niveau d'alimentation (VE1, VE2, VE3) présentant une plage de tension donnée et étant relié à un autre niveau d'alimentation via au moins une interface,
**caractérisé en ce que**
- chacun des trois niveaux d'alimentation (VE1, VE2, VE3) est réglé en tant qu'unité de réglage indépendante (RE1, RE2, RE3), un réglage primaire, un réglage secondaire et un réglage tertiaire étant opérés en cas de réglage (R1, R2, R3) d'une unité de réglage individuelle (RE1, RE2, RE3) et
- une interface est définie entre respectivement deux unités de réglage (RE1, RE2, RE3) par une commande d'une puissance active (P) et d'une puissance réactive (Q) transmises entre les deux unités de réglage (RE1, RE2, RE3).

2. Procédé selon la revendication 1, **caractérisé en ce qu'**est respectée, pour chaque unité de réglage (RE1, RE2, RE3), une plage de tension donnée pour l'unité de réglage respective (RE1, RE2, RE3).

3. Procédé selon l'une des revendications 1 à 2, **caractérisé en ce que** sont échangées, via l'interface entre les unités de réglage (RE1, RE2, RE3), des valeurs de réglage en particulier pour la puissance réactive (Q), la puissance active (P) et/ou le facteur de puissance (cosΦ).

4. Procédé selon l'une des revendications 1 à 3, **caractérisé en ce que** des unités de réglage (RE1, RE2, RE3) sont séparées au niveau de l'interface par un abaissement de la puissance active (P) et de la puissance réactive (Q) transmises entre les unités de réglage (RE1, RE2, RE3).

5. Procédé selon l'une des revendications 1 à 4, **caractérisé en ce que**, pour reconnecter des unités de réglage (RE1, RE2, RE3) à d'autres unités de réglage (RE1, RE2, RE3), on effectue tout d'abord une synchronisation entre les unités de réglage à relier (RE1, RE2, RE3) et **en ce qu'**on augmente ensuite, au niveau de l'interface entre les unités de réglage (RE1, RE2, RE3), la puissance active (P) et la puissance réactive (Q) transmises entre les unités de réglage (RE1, RE2, RE3).

6. Procédé selon l'une des revendications 1 à 5, **caractérisé en ce qu'**un niveau haute tension ou de transport est prévu en tant que premier (VE1) des trois niveaux d'alimentation (VE1, VE2, VE3), un niveau moyenne tension ou de distribution est prévu en tant que deuxième (VE2) des trois niveaux d'alimentation (VE1, VE2, VE3) et un niveau basse tension ou de distribution fine est prévu en tant que troisième (VE3) des trois niveaux d'alimentation (VE1, VE2, VE3).
